# EUROPEAN PATENT SPECIFICATION

(11) **EP 2 506 350 B1**
(45) Date of publication and mention of the grant of the patent: **29.03.2017**
(21) Application number: 10833317.0
(22) Date of filing: 26.11.2010
(51) Int. Cl.: H01M 4/86, B01J 23/644, B01J 35/10, B01J 37/08, H01M 8/10, B01J 23/00, B01J 23/10, B01J 23/14, B01J 23/18

(54) **OXIDE-BASED STABLE HIGH-POTENTIAL CARRIER FOR SOLID POLYMER FUEL CELL**
STABILER TRÄGER AUF OXIDBASIS MIT HOHEM POTENZIAL FÜR EINE FESTPOLYMER-BRENNSTOFFZELLE
PORTEUR DE CHARGE À HAUT POTENTIEL STABLE À BASE D'OXYDE DESTINÉ À UNE PILE À COMBUSTIBLE POLYMÈRE SOLIDE

(30) Priority: 27.11.2009 JP 2009270275; 26.03.2010 JP 2010073613
(43) Date of publication of application: 03.10.2012
(73) Proprietor: University of Yamanashi, Yamanashi 400-8510 (JP)
(72) Inventor: WATANABE, Masahiro, Kofu-shi Yamanashi 400-8510 (JP); KAKINUMA, Katsuyoshi, Kofu-shi Yamanashi 400-8510 (JP); UCHIDA, Makoto, Kofu-shi Yamanashi 400-8510 (JP); KAMINO, Takeo, Kofu-shi Yamanashi 400-8510 (JP); UCHIDA, Hiroyuki, Kofu-shi Yamanashi 400-8510 (JP)
(74) Representative: Grünecker Patent- und Rechtsanwälte PartG mbB
(86) International application number: PCT/JP2010/071106
(87) International publication number: WO 2011/065471

(56) References cited:
- WO-A1-2005/105673
- WO-A1-2006/009327
- WO-A1-2009/060582
- JP-A- 2000 048 833
- JP-A- 2004 363 056
- JP-A- 2005 149 742
- JP-A- 2006 210 135
- JP-A- 2006 224 095
- JP-A- 2007 141 624
- US-A1- 2009 105 069
- US-A1- 2009 214 866

## Description

### Technical Field

The present invention relates to a composition and a structure of a nitride particulate support which is used for electrodes for polymer electrolyte fuel cells (PEFC), and relates to the electrode.

### Background Art

Conventionally, as an electrode catalyst of fuel cells, there has been frequently used a support in which noble metal particles are supported on carbon particles having a specific surface area of 100 m²/g or more. Particularly, a carbon particle with high conductivity is effective as a support of a catalyst for electrodes of fuel cells. For example, powder in which platinum particles or noble-metal alloy particles, such as platinum and ruthenium or platinum and iron, are supported on carbon particles is known as a highly efficient electrode catalyst for polymer electrolyte fuel cells, in Patent Literatures 1 and 2. These patent literatures describe that an electrode for polymer electrolyte fuel cells can be produced in such manner that platinum or an alloy made of platinum and at least one other kind of metal is made to be supported on carbon.

Patent Literatures 3, 4, 5, and 6 describe that a catalyst in which perovskite-type oxide particles and base metal oxides are used as an alternative catalyst to platinum to be supported on carbon particles has an effect as an electrode catalyst for fuel cells. Furthermore, Patent Literature 7 describes that output characteristics and durability of electrochemical devices, such as fuel cells, are effectively improved in such manner that a material composed of oxides, such as mainly titanium dioxides, is made to support platinum thereon and mixed with carbon in order to give conductivity. Patent Literature 8 discloses an inorganic oxide support which suppresses the grain growth of metals supported thereby. Patent Literature 9 discloses metal oxide structures having improved contact with solid particles, such as carbon-containing components, which are especially useful for the preparation of oxidation catalysts. In Patent Literature 10, cerium oxide powders having a high BET surface area and a narrow particle size distribution are disclosed. Patent Literature 11 discloses the preparation of a mixed oxide useful as support for a noble metal catalyst.

Patent Literatures 12 and 13 mention examples in which an oxynitride, a nitride, and a transition metal tetranitride are used as alternative catalysts to platinum, and made to be supported on carbon particles to be used as electrode catalysts.

Patent Literature 14 discloses a technique relating to an improved catalyst without carbon, which is produced by synthesizing a platinum catalyst supported on oxide via a plasma process. However, each of the Patent Literatures mentions to use a spherical catalyst support, and neither describes nor suggests that the catalyst support has a chain or dendritic form.

### Citation List

### Patent Literature

PTL 1: Japanese Patent Application Laid-Open No. 2001-15121
PTL 2: Japanese Patent Application Laid-Open No. 2006-127979
PTL 3: Japanese Patent Application Laid-Open No. 2008-4286
PTL 4: Japanese Patent Application Laid-Open No. 2006-26586
PTL 5: Japanese Patent Application Laid-Open No. 2004-363056
PTL 6: Japanese Patent Application Laid-Open No. 2003-092114
PTL 7: Japanese Patent Application Laid-Open No. 2005-174835
PTL 8: WO 2006/009327 A1
PTL 9: US 2009/105069 A1
PTL 10: US 2009/214866 A1
PTL 11: WO 2005/105673 A1
PTL 12: Japanese Patent Application Laid-Open No. 2008-155111
PTL 13: Japanese Patent Application Laid-Open No. 2005-44659
PTL 14: Japanese Patent Application Laid-Open No. 2007-203129

### Summary of Invention

### Technical Problem

In recent years, PEFC has been expected to be applied to automobiles, etc., and an electrode which bears frequent load changes corresponding to acceleration and deceleration and start and stop during driving has been needed. That is, since a cathode electric potential reaches 0.9 V or more by frequent load changes and start and stop, carbon for a cathode on which platinum is supported considerably degrades due to an oxidation reaction shown in a following reaction formula (1).

C + 2H₂O → CO₂ + 4H⁺ + 4e⁻ (E⁰ = 0.207 V vs SHE) ... (1)

Therefore, as described in the Patent Literatures 3, 4, 5, and 6, there is well-known an electrode catalyst which prevents carbon deterioration in such manner that platinum and/or an alloy compound thereof is made to be supported on carbon by using a metal oxide, an oxynitride, a nitride, etc. as a promoter. Furthermore, the Patent Literature 7 describes an attempt to improve durability by using a metal oxide as a support. However, since the conductivity is low and the specific surface area is not large, sufficient catalyst performance cannot be provided, and carbon (carbon black, graphite carbon, etc.) needs to be added.

Generally, in order to use powder as an electrode support, it has been performed that the powder is made into particles to enlarge a specific surface area. However, there has been concern that, when oxide and/or nitride powder is made into fine particles, a contact between powder bodies is a point contact and contact resistance increases, whereby electric conductivity in a catalyst support decreases and catalyst performance cannot be fully provided. Therefore, it is considered that finer oxide and/or nitride particles having a high specific surface area are synthesized and the particles are made to be electrically joined and/or bound together to maintain electric conductivity.

However, although oxide and/or nitride particles can be synthesized by a method such as an atomizing method, the particles in a green compact have high electric resistance. Therefore, in order to reduce the electric resistance, a high-temperature firing (calcination or heat treatment) process is required for making the particles aggregate and/or bind. However, at the time of the firing (calcination or heat treatment), the specific surface area considerably decrease, and therefore it was difficult to synthesize an oxide and/or a nitride particulate support having a high specific surface area. Furthermore, it was found that, even if platinum is highly dispersed on oxide and/or nitride powder, a surface of the platinum is sometimes covered by a support due to the SMSI effect, etc., whereby catalyst performance is considerably reduced.

In order to solve the above-mentioned problems, the present invention develops a support for electrode catalysts in which nitride particles having both high conductivity and a high specific surface area are bound, and provides an electrode catalyst for fuel cells having high active performance in which Pt and/or a Pt alloy each having a particle diameter controlled in nano-scale is supported on the support, and provides a support for an electrode catalyst. It is noted that a fuel cell using the catalyst must neither dissolve nor corrode at a high-potential of 0.9 V or more, and must operate stably under an operation condition of PEFC.

### Solution to Problems

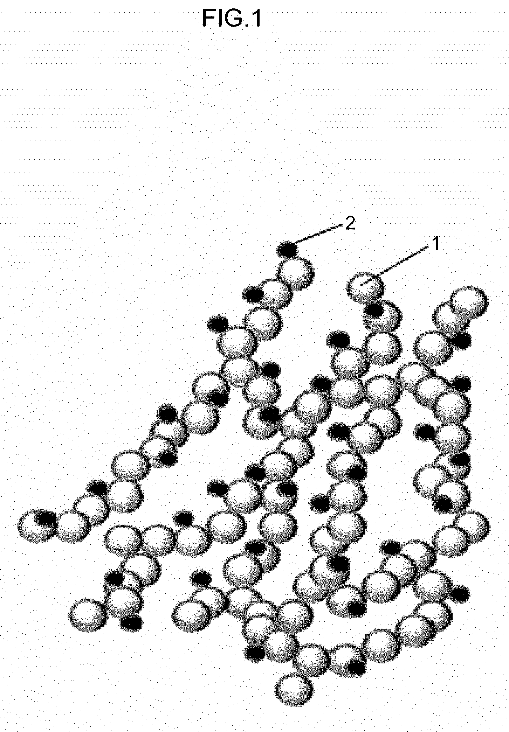

The present invention forms a nitride structure having a certain specific composition and crystal structure by a certain high temperature place, for example, a flame method, and the nitride structure neither dissolves nor corrodes at a high-potential of 0.9 V or more, and shows a higher electron conductivity. That is, a nitride crystal having a primary particle diameter of 5 nm to 100 nm is formed so as to have a chain or dendritic structure (a structure shown in Fig. 1), and used as a base material of a support. Here, the flame process means a process for forming a very fine metal oxide, etc. obtained by directly spraying a solution in which metal is dissolved, into a flame of high temperature of acetylene, etc.

Here, it is noted that the aggregation and binding and the structure can be determined by a photographed image by a transmission electron microscope or a transmission scanning electron microscope.

A support for electrode catalysts in the present invention is configured such that an aggregation body, formed of aggregated primary particles of oxide of at least one kind of metal selected from transition metals, tin, antimony, zirconium, molybdenum, indium, tantalum, and tungsten reduced in a nitrogen gas atmosphere or an ammonia atmosphere at a high temperature place of 500 degrees C or more to be at least partially metal nitride, and, at least 80% of crystallites, at least a part of which is metal nitride and which have a size of 5 nm to 100 nm as observed by a photographed image by a transmission electron microscope, aggregate and bind each other to form chain or dendritic structures each of which is made of 5 or more of the crystallites, wherein the aggregation body is obtained by preparing a mineral turpentine solution containing the ions of said metals, making the solution into a mist by using an atomizer using oxygen, and introducing the solution into a high-temperature chemical flame or plasma.

Thus, a nitride having a special form is formed. As a result, a specific surface area of a powder produced by the present invention is 10 or more times larger than a specific surface area of a powder obtained by mixing and firing row material powders. Furthermore, contact resistance between particles considerably decreases and therefore a nitride support having high electrical conductivity is obtained.

In the electrode catalyst of the present invention, 1 to 50 wt% of a noble metal and/or an alloy containing a noble metal, each having an average particle diameter of 1 to 20 nm, is supported on a support for electrode catalysts.

Thus, catalytic activity spots of fine platinum, etc. are uniformly distributed over the whole of a nitride support, and therefore catalysts of noble metal and/or noble-metal alloy remains stable and highly active without agglomerating each other, and an electrode catalyst with high catalyst performance can be obtained.

In the electrode catalyst of the present invention, a support covering material which covers a part of a surface of the electrode catalyst is removed by acid treatment.

When a surface of a platinum catalyst is covered with a coating, catalytic reaction on the surface is easily inhibited. Therefore, when the coating can be removed, catalytic activity is considerably improved and, at the same time, stability and high durability are acquired.

A fuel cell of the present invention uses the above-mentioned electrode catalyst.

Thus, at a high-potential of 0.9 V or more, dissolution, corrosion, etc. do not occur in the electrode catalyst. Furthermore, with the electrode catalyst material of the present invention, PEFC which is inexpensive and excellent in high durability can be put to practical use and widespread diffusion of fuel cells can be realized.

Compared with an electrode catalyst in which Pt and/or an alloy containing Pt is supported on a carbon support, the electrode catalyst of the present invention in which a noble metal is supported on a nitride particulate support has both stability and high durability at high-potential, whereby long-term stable operation and widespread diffusion of PEFC can be achieved.

### Advantageous Effects of Invention

In the support for an electrode catalyst according to the present invention, a nitride having a specific form is formed. As a result, for example, compared with a specific surface area of a powder obtained by mixing and firing raw material powders, a specific surface area of the powder produced by the present invention is 10 or more times larger, and furthermore, contact resistance between particles considerably decreases, whereby nitride support having high electrical conductivity is obtained.

### Brief Description of Drawings

Fig. 1 shows a structure model.
Fig. 2 is a schematic diagram of an apparatus for a flame process.
Fig. 3 is a partial view of a spray nozzle.
Fig. 4 shows a TEM image of a Sn_{0.96}Sb_{0.4}O_{2-δ} support.
Fig. 5 shows a catalyst production procedure.
Fig. 6 shows an XRD pattern of a platinum catalyst supported on Sn_{0.96}Sb_{0.04}O_{2.δ} electrode catalyst.
Fig. 7 shows a TEM image of a platinum catalyst supported on Sn_{0.96}Sb_{0.04}O_{2-δ} electrode catalyst.
Fig. 8 shows a CV variation in a durability test of a platinum catalyst supported on Sn_{0.96}Sb_{0.04}O_{2-δ} electrode catalyst.
Fig. 9 shows a CV curve of a commercial platinum catalyst supported on carbon electrode catalyst, obtained by battery characteristic evaluation for comparison.
Fig. 10 shows ECA variations in durability tests of a platinum catalyst supported on Sn_{0.96}Sb_{0.04}O_{2-δ} electrode catalyst and a commercial platinum catalyst supported on carbon electrode catalyst.
Fig. 11 shows XRD patterns of SnO_{2-δ} and Sn_{0.96}Sb_{0.04}O_{2-δ} supports.
Fig. 12 shows a STEM image of a SnO_{2-δ} support.
Fig. 13 shows XRD patterns of TiO_{2-δ} and Ti_{0.95}Nb_{0.05}O_{2-δ} supports.
Fig. 14 shows a STEM image of a Ti_{0.95}Nb_{0.05}O_{2-δ} support.
Fig. 15 shows an XRD pattern of a Sr(Ti_{0.9}Nb_{0.1})O_{3-δ} support.
Fig. 16 shows a STEM image of a Sr(Ti_{0.9}Nb_{0.1})O_{3-δ} support.
Fig. 17 shows an XRD pattern about a (La_{0.6}Sr_{0.4})TiO_{3-δ} support.
Fig. 18 shows a STEM image of about a (La_{0.6}Sr_{0.4})TiO_{3-δ} support.
Fig. 19 shows a production procedure of a 20 wt% platinum catalyst supported on Sn_{0.96}Sb_{0.04}O_{2-δ} catalyst by a colloidal method.
Fig. 20 shows a TEM image of a platinum catalyst supported on Sn_{0.96}Sb_{0.04}O_{2-δ} electrode catalyst.
Fig. 21 shows a CV variation of a platinum catalyst supported on Sn_{0.96}Sb_{0.04}O_{2-δ} electrode catalyst.
Fig. 22 shows a production procedure of a 10 wt% platinum catalyst supported on TiN catalyst by a colloidal method.
Fig. 23 shows a TEM image of a platinum catalyst supported on TiN electrode catalyst.

### Description of Embodiments

When primary particles of a nitride of the present invention are produced, a production method using a chemical flame of propane, methane, acetylene, hydrogen, nitrous oxide or the like is applicable. In the present invention, a mineral turpentine solution containing metal ions as a raw material is prepared in advance, then the solution is made into a mist by using an atomizer using oxygen and/or nitrogen and introduced into a high-temperature chemical flame or plasma, whereby at least 80% of the primary particles aggregate and bind each other to form secondary particles having chain and/or dendritic structures each of which is made of 5 or more primary particles, and thus a support made of the secondary particles is obtained. At this time, a yield of the secondary particles can be improved by heat treatment at 600 to 800 degrees C.

When platinum and/or platinum alloy particles of 1 to 20 nm in size are made to be supported on a surface of the obtained support, a method, such as a reversed micelle method, a colloidal method, and an impregnation method, is applicable. For example, in a state where platinum and platinum alloy particles of 1 to 20 nm in size, which have been synthesized, are kept dispersed in an organic solvent by a reversed micelle method, the support particles are added. Then, the platinum and platinum alloy particles are made to adsorb on a surface of the support particles and a heat treatment is performed after filtration and drying to produce an electrode catalyst.

Hereinafter, the metal oxide particles will be explained in detail. The substances are oxide particles containing at least one kind of element selected from rare earths, alkaline earths, transition metals, niobium, bismuth, tin, antimony, zirconium, molybdenum, indium, tantalum, and tungsten. Rare earths, alkaline earths, niobium, bismuth, antimony, and tantalum are dopants to improve conductivity, and therefore preferable; transition metals are elements to constitute a parent material which gives conductivity and therefore preferable; and the above-mentioned other elements are not transition metals but are elements to constitute a parent material which gives conductivity and therefore preferable. It is noted that, since these particles do not dissolve even under a highly acidic condition, at least one kind of titanium, iron, niobium, tantalum, zirconium, and tin is preferably contained.

Although tin, antimony, titanium, lanthanum, strontium, and niobium are used as main elements in Reference Examples described later, the choice is not limited to tin, antimony, titanium, lanthanum, strontium, and niobium, but the above-mentioned metallic elements can be selected. That is because a metal oxide and a nitride often generally have a high conductivity when an addition element, etc. are added, that is, a dopant is added.

In each of the cases, an element having a possibility to have high electric conductivity is more preferably used as a base material.

Furthermore, even if a support is excellent in corrosion resistance but has slightly lower conductivity, the support is capable of fully demonstrating performance of electrode reaction when the support is mixed with carbon.

Regarding an aggregation body of these metal oxide primary particles, the aggregation is configured such that at least 80% of the primary particles made of crystallites, each being a single crystal of metal oxide with a size of 5 nm to 100 nm, aggregate and bind together to form chain or dendritic structures each of which is made of 5 or more primary particles and has a three-dimensional structure or a branch structure, and thus obtained aggregation body is used as a support for electrode catalysts. It is not preferable that the number of crystallites which aggregate and bind together is 5 or less since improvement in electrical conductivity cannot be expected. An aggregating and binding state can be confirmed with a photographed image by a transmission electron microscope and/or a scanning transmission electron microscope.

Each particulate support of metal nitride of the present invention in itself has conductivity, and therefore is available as a catalyst support for electrodes, without including carbon.

Electric conductivity is preferably 0.1 S/cm to 1000 S/cm so that a desired electrode catalyst performance is obtainable.

In addition, it is preferable that the aggregation body of primary particles has a bulk specific gravity of 0.1 to 0.95 with respect to a theoretical bulk density in a closest packed state of the primary particles. A bulk specific gravity of the aggregation was obtained in such manner that 0.5 g of the aggregation body was filled in a steel container having a rectangular hole of 5.0 mm in width, 25 mm in length, and 20 mm in depth, then measured as a green compact by applying pressure of 50 kgf/m² for 1 minute with a uniaxial pressure device, and a ratio to a theoretical bulk specific gravity calculated in a closest packed state of the particles with an average particle diameter was calculated. It is desirable that a porosity at the time of filling of each particulate support is 26% or more, preferably 40% or more. This is because when a porosity at the time of filling of the support is less than the above-mentioned value, a distance between particles of platinum and platinum alloy catalysts is smaller, whereby the particles agglomerate on a support and become coarse, or oxygen reduction activity decreases.

Each particulate support is produced by a particle production method under a high temperature condition, in a chemical flame process or a plasma process (high frequency, microwave). In a chemical flame process or a plasma process, a raw material is dissolved in a mineral turpentine solution, and the raw material solution is introduced, then reaction and cooling are instantly performed, whereby intended primary particles are produced. As a result, the primary particles partially aggregate and bind together, and thus an electrode catalyst support having a high specific surface area can be synthesized. Furthermore, a noble metal is made to be supported on the obtained support, whereby a highly efficient electrode catalyst is obtainable.

When a particle diameter of platinum and a platinum alloy to be a supported noble metal is less than 1 nm, dissolution is caused with progression of electrode reaction, while when the particle diameter is more than 20 nm, a surface area of electrochemical activity is smaller and a desired electrode performance is unobtainable. Furthermore, a supported amount of platinum and a platinum alloy at this time is preferably 1 to 50 wt%.

When a surface of a platinum catalyst is covered with a coating, catalytic reaction on the surface is easily inhibited. After synthesizing, immersion into hydrochloric acid, nitric acid, sulfuric acid, hydrofluoric acid, or perchloric acid, or heat treatment under hydrogen-containing gas atmosphere enables the coating to be removed, whereby catalytic activity is considerably improved and, at the same time, stability and high durability are obtainable. As a result, electrode reaction performance can be improved.

### < Reference Example 1>

### (20 wt%-platinum catalyst supported on Sn_{0.96}Sb_{0.04}O_{2-δ} catalyst)

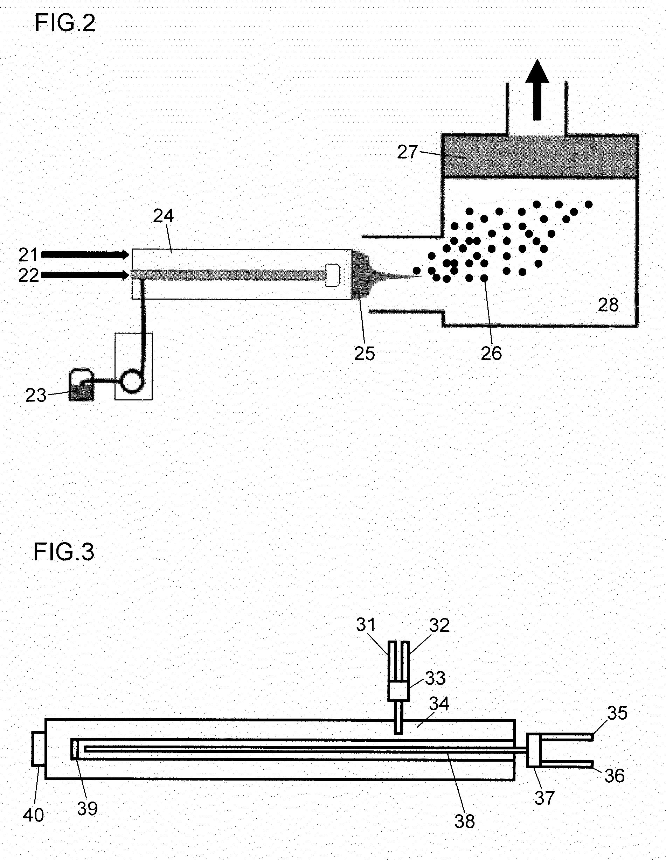

First, in the present Reference Example, a synthesizing apparatus for a flame process shown in Fig. 2 was used. Oxygen, air, and propane are introduced from gas introducing portions 31 and 32 of a spray nozzle shown in Fig. 3 at a flow rate of 14 L/min. (0.5 MPa), 1 L/min. (0.05 MPa), respectively, and mixed by a gas mixer 33. The mixed gas is introduced to a stainless pipe 34, and a chemical flame is formed by a burner 40.

Meanwhile, a solution which is obtained by dissolving tin octylate and antimony octylate in mineral turpentine at a molar ratio of 0.96:0.04 is introduced into a solution introducing part 35 at 1 to 10 g per minute, and passes through a mixer 37 and a stainless pipe 38 by air gas which is put in a support gas introducing portion 36.

Furthermore, the solution is made into mist via a fluid nozzle, an air nozzle, and a retainer cap 39, and introduced into a chemical flame by the burner 40. The temperature of the chemical flame is raised to approximately 1600 degrees C by the heat of combustion of propane and mineral turpentine, and a Sn_{0.96}Sb_{0.04}O_{2-δ} powder is formed in the chemical flame. As shown in Fig. 2, the powder formed was collected by a collecting filter 27, and a collected amount of the powder was 10 g in a 20-minute operation.

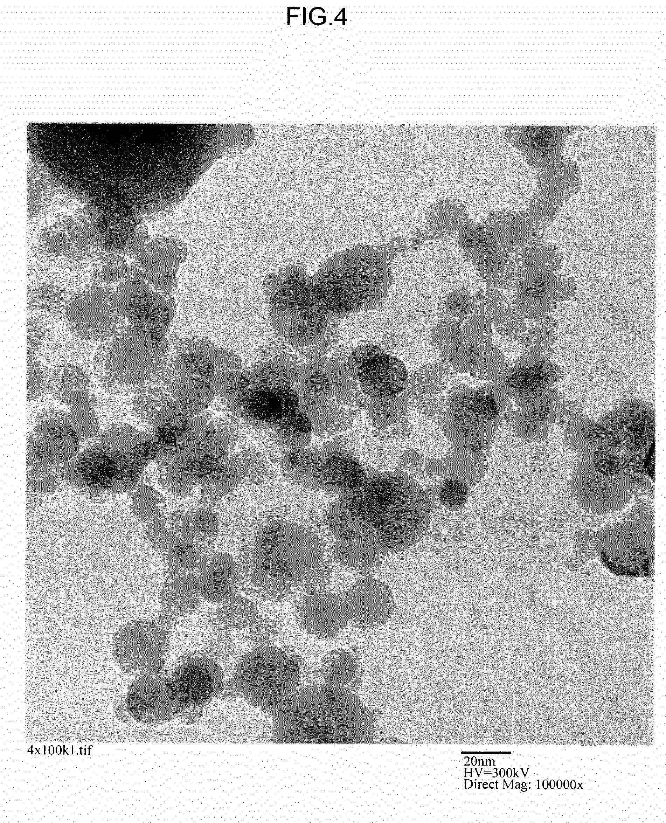

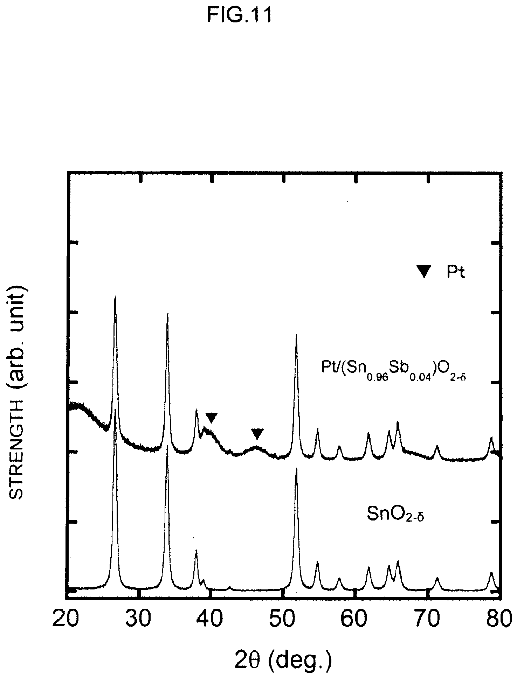

The Sn_{0.96}Sb_{0.04}O_{2-δ} powder was evaluated by an X-ray diffractometer (XRD) (Fig. 11), and the form was observed by a transmission electron microscope (TEM) (Fig. 4). 0.5g of Sn_{0.96}Sb_{0.04}O_{2-δ} powder was filled in a steel container having a rectangular hole of 5.0 mm in width, 25 mm in length, and 20 mm in depth, and then pressure of 50 kgf/m² was applied for 1 minute by a uniaxial pressure device to make a green compact. The bulk specific gravity was 0.9 with respect to a theoretical bulk specific gravity calculated in a closest packed state of the particles having an average particle diameter.

The electric conductivity was 1.3 S/cm. A specific surface area of the powder was a BET value of 78.6 m²/g. A distance between centers of the primary particles which join each other (r_{c}) was smaller than the sum of the radii of the corresponding primary particles (r₁, r₂), that is, 50 nm or less. 40 mg of Sn_{0.96}Sb_{0.04}O_{2-δ} was put into 25 ml of diphenyl ether and mixed by an ultrasonic dispersion machine for 30 minutes to prepare a dispersion liquid of Sn_{0.96}Sb_{0.04}O_{2-δ}. 20.16 mg of platinum acetylacetonato and 260 mg of hexadecanediol were put into 10 ml of diphenyl ether and mixed in a nitrogen current at 110 degrees C for 30 minutes to prepare an organic solution containing a platinum complex.

As surface active agents, 85 µL of oleic acid and 80 µL of oleylamine acid were put into the obtained solution and mixed in a nitrogen current at 220 degrees C for 30 minutes to prepare a solution composed of oleic acid and oleylamine acid and including micelles containing platinum ions. 1 ml of lithium triethylborohydride tetrahydrofuran solution was added to the above-mentioned solution and mixed in a nitrogen current at 270 degrees C for 30 minutes to reduce platinum ions in the above-mentioned micelles and prepare a dispersion liquid of platinum particles covered with the surface active agents.

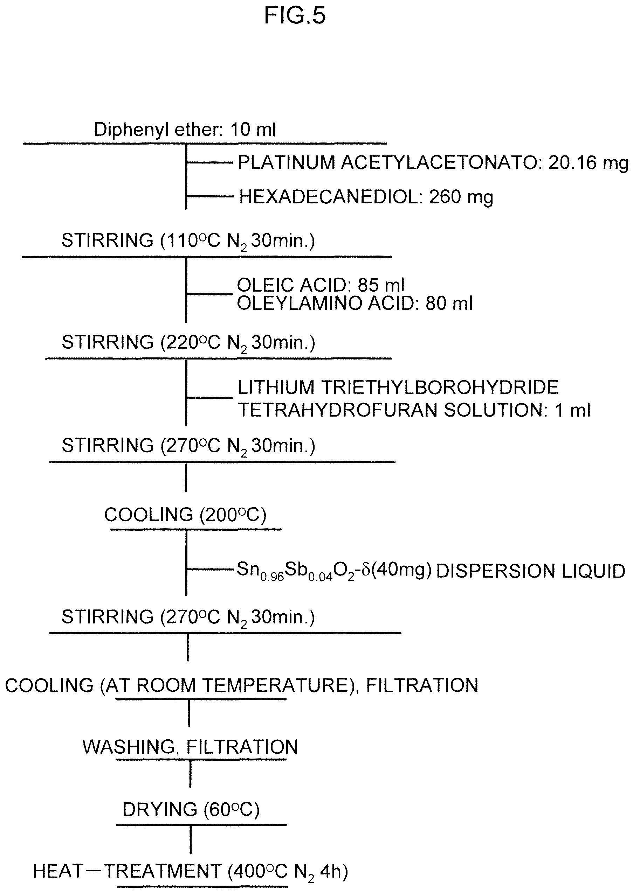

The obtained dispersion liquid was allowed to cool slowly to 200 degrees C and mixed with the above-mentioned Sn_{0.96}Sb_{0.04}O_{2-δ} dispersion liquid, then mixed in a nitrogen current at 270 degrees C for 30 minutes, whereby the platinum particles covered with the surface active agents were made to adsorb on the surface of the Sn_{0.96}Sb_{0.4}O_{2-δ} powder. The Sn_{0.96}Sb_{0.04}O_{2-δ} particles were filtered at room temperature, and washed by ethanol several times. After drying at 60 degrees C, a heat-treatment was carried out by an electric furnace in nitrogen at 300 degrees C and a further heat-treatment was carried out in 0.4% hydrogen (nitrogen base) at 300 degrees C, whereby a platinum catalyst supported on Sn_{0.96}Sb_{0.04}O_{2-δ} electrode powder was obtained. A series of these production procedures are summarized in Fig. 5.

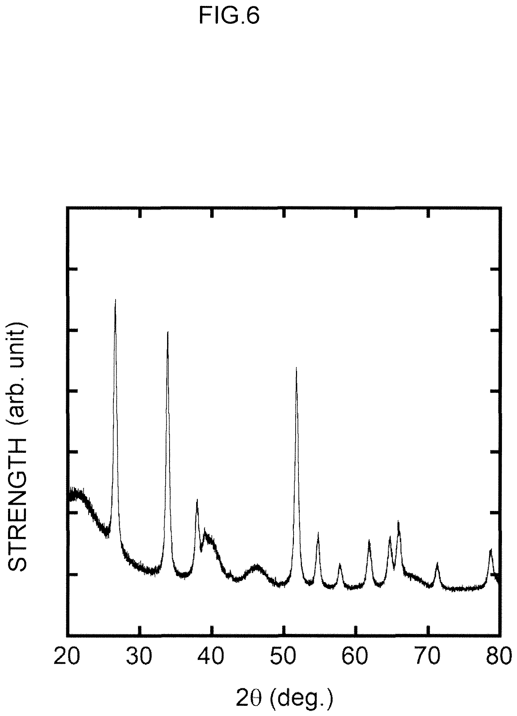

For the platinum catalyst supported on Sn_{0.96}Sb_{0.04}O_{2-δ} electrode powder which was obtained in this manner, a powder X-ray diffraction measurement was carried out, and as a result, a diffraction pattern shown in Fig. 6 was obtained, and existence of Pt and Sn_{0.96}Sb_{0.04}O_{2-δ} was confirmed. At this time, crystallite diameters of each powder obtained from a half-value width of a diffraction peak were 3.2 nm for Pt and 10 nm to 50 nm for Sn_{0.96}Sb_{0.04}O_{2-δ}.

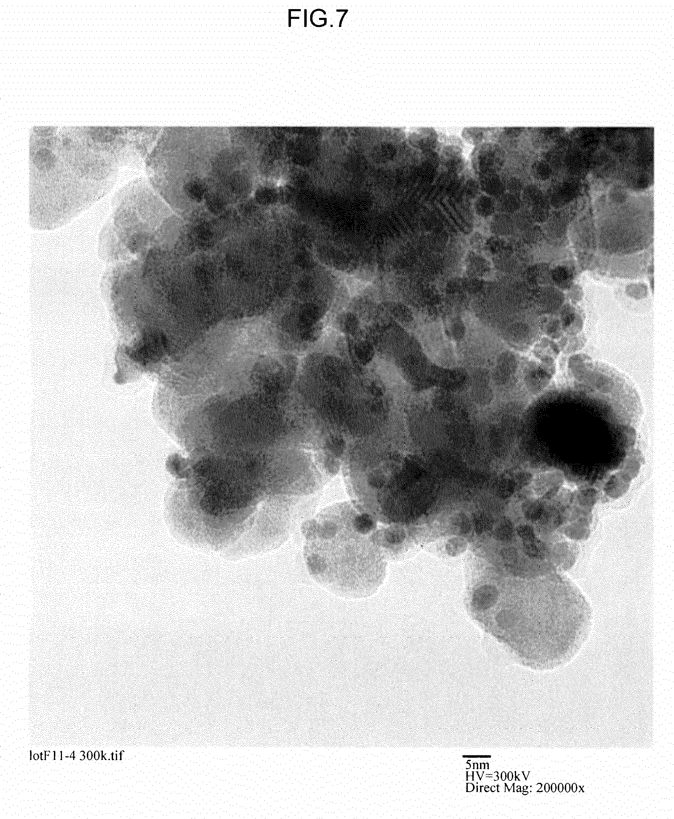

It is noted that a supported amount of Pt was confirmed to be 19 wt% by using inductively coupled plasma emission spectrometry (ICP). Furthermore, a form of the obtained powder was observed by TEM (refer to Fig. 7). The result showed that the Sn_{0.96}Sb_{0.04}O_{2-δ} powder had a globular shape and an average diameter of 10 nm, and each particle were bound each other and three-dimensionally linked together in a chain form. The specific surface area at this time was 78 m²/g (BET value).

The Pt had a globular shape and was uniformly dispersed and supported on a surface of the Sn_{0.96}Sb_{0.04}O_{2-δ}, and the average particle diameter was 3.0 nm (calculated by averaging the particle diameters of 500 particles). A coating layer of several nanometer in thickness existed on a surface of the Pt. For the obtained catalyst, an acid treatment was carried out with 10 wt% of hydrofluoric acid.

For each electrode powder obtained by the above methods, CV measurement was performed using a rotating ring disk electrode. As an electrolyte, 0.1 mol/l of perchloric acid solution, and as a reference pole, a reversible hydrogen electrode (RHE) were used. A scattering rate of an electric potential was set to 0.1 V/sec. Furthermore, in order to confirm stability of an electrode material at 0.9 V or more, a sweep was performed 100 times in an electric potential range of 0.05 V to 1.3 V, and then CV was measured in an electric potential range of 0.05 V to 1.0 V.

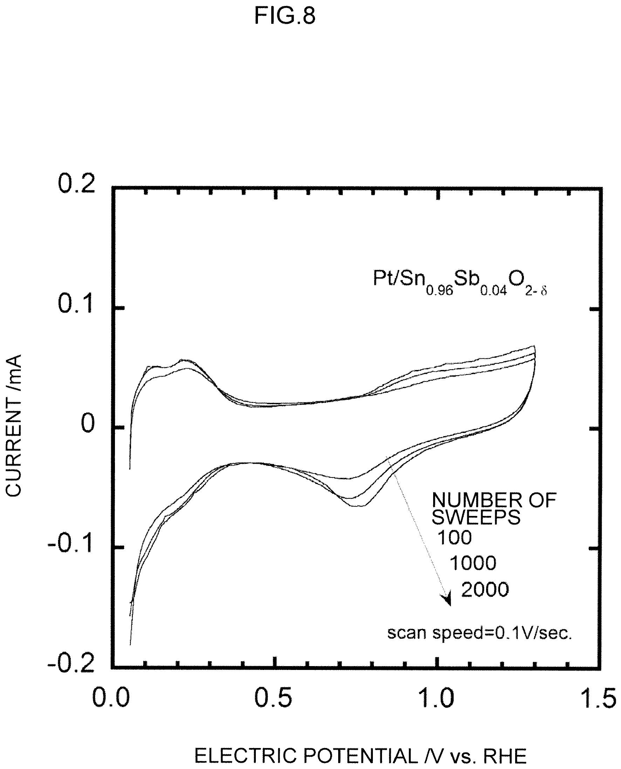

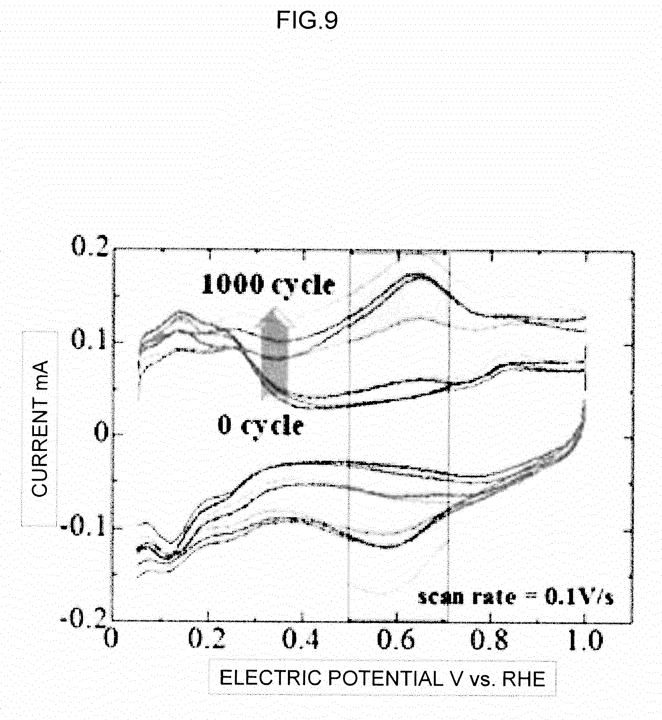

Regarding this measurement procedure as one set, 10 or more sets were performed (a sweep of 1000 or more cycles). Fig. 8 shows a CV measurement result of a 10 wt% platinum catalyst supported on Sn_{0.96}Sb_{0.04}O_{2-δ}. For comparison, Fig. 9 shows a CV measurement result of a commercial platinum catalyst supported on carbon when a sweep was performed in an electric potential range of 0.05 V to 1.0 V. In the platinum catalyst supported on carbon, a current value increases around 0.2 V to 0.6 V in accordance with a sweep of an electric potential, and a peak associated with oxidation-reduction of a quinone group produced by deterioration of carbon appears around 0.6 V.

In contrast, in the platinum catalyst supported on Sn_{0.96}Sb_{0.04}O_{2-δ} electrode, current values around 0.2 V to 0.6 V are constant in each measurement, and a platinum effective reaction area (ECA) which was calculated from a peak area attributable to an oxygen adsorption wave around 0.05 V to 0.4 V was 50 m²/g_{(Pt)}. It is noted that an ECA of a catalyst to which neither a heat-treatment nor a hydrofluoric acid treatment was given in 0.4% hydrogen (nitrogen base) at 300 degrees C was 20 m²/g_{(Pt)}.

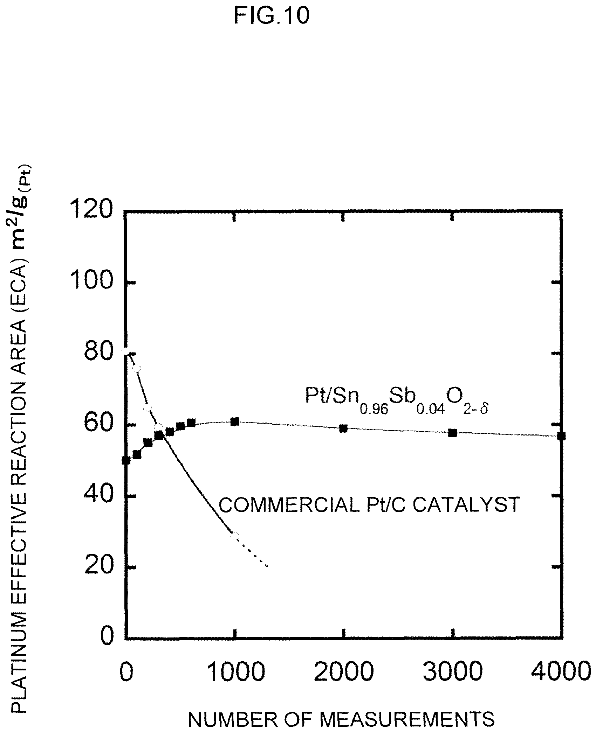

An ECA in the sets was 50m²/g_{(Pt)} in a 1000th or subsequent sets (refer to Fig. 10). Fig 10 also shows a variation of an ECA in a commercial electrode catalyst for PEFC (platinum catalyst supported on carbon). Even in a high-potential of 0.9 V or more, the platinum catalyst supported on Sn_{0.96}Sb_{0.04}O_{2-δ} electrode was stable. The commercial electrode degraded by repeating the cycles, while an ECA of the platinum catalyst supported on Sn_{0.96}Sb_{0.04}O_{2-δ} electrode reaches a maximum value of 60 m²/g_{(Pt)} around 1000 cycles and the reduction thereafter was slighter, compared with the commercial Pt/C catalyst. Moreover, a variation was not observed in the double layer region, and the platinum catalyst supported on Sn_{0.96}Sb_{0.04}O_{2-δ} was found to demonstrate stable performance at high potential.

### < Reference Example 2>

### (SnO_{2-δ} support)

Also in the present Reference Example, the synthesizing apparatus for a flame process shown in Fig. 2 was used. A flow rate of oxygen, air, and propane at the time of synthesizing and formation of a chemical flame is the same as in Reference Example 1. A solution which is obtained by dissolving tin octylate in mineral turpentine is made into mist by the same method as in Reference Example 1 and introduced into a chemical flame. The temperature of the chemical flame is raised to approximately 1600 degrees C by the heat of combustion of propane and mineral turpentine, and a SnO_{2-δ} powder is formed in the chemical flame.

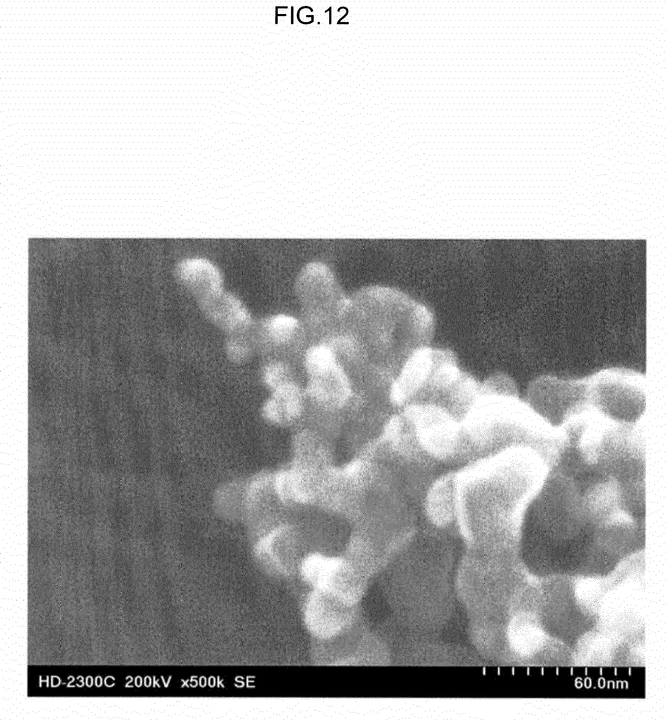

The powder formed is collected by the collecting filter 27 (Fig. 2), and a collected amount of the powder was 7 g in a 20-minute operation. The SnO_{2-δ} powder was evaluated by XRD (refer to Fig. 11), and the form was observed by a scanning transmission electron microscope (STEM) (refer to Fig. 12).

0.5g of the SnO_{2-δ} powder was filled in a steel container having a rectangular hole of 5.0 mm in width, 25 mm in length, and 20 mm in depth, and then pressure of 50 kgf/m² was applied for 1 minute with a uniaxial pressure device to make a green compact. The bulk specific gravity was 0.9 with respect to a theoretical bulk specific gravity calculated in a closest packed state of the particles having an average particle diameter. The electric conductivity was 0.4 S/cm. A specific surface area of the powder was a BET value of 69.4 m²/g. A distance between centers of the primary particles which join each other (r_{c}) was smaller than the sum of the radii of the corresponding primary particles (r₁, r₂), that is, 50 nm or less.

### < Reference Example 3>

### (Ti_{0.95}Nb_{0.05}O_{2-δ} support)

Also in the present Reference Example, the synthesizing apparatus for a flame process shown in Fig. 2 was used. A flow rate of oxygen, air, and propane at the time of synthesizing and formation of a chemical flame is the same as in Reference Example 1. A solution which is obtained by dissolving titanium octylate and niobium octylate in mineral turpentine is made into mist by the same method as in Reference Example 1 and introduced into a chemical flame. The temperature of the chemical flame is raised to approximately 1600
degrees C by the heat of combustion of propane and mineral turpentine, and a Ti_{0.95}Nb_{0.05}O_{2-δ} powder is formed in the chemical flame.

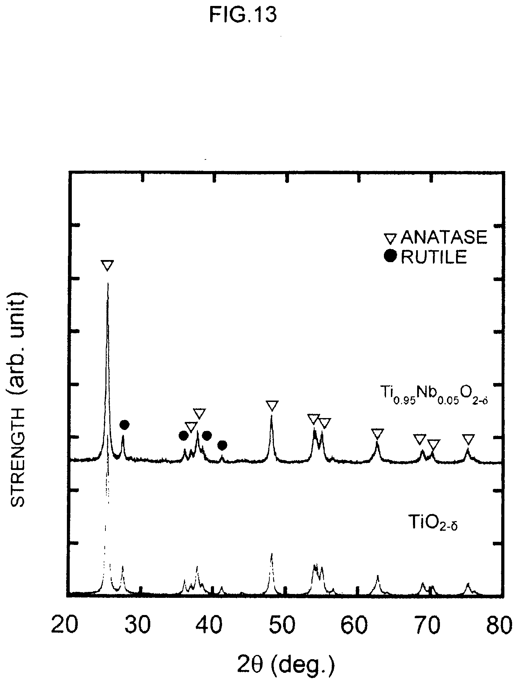

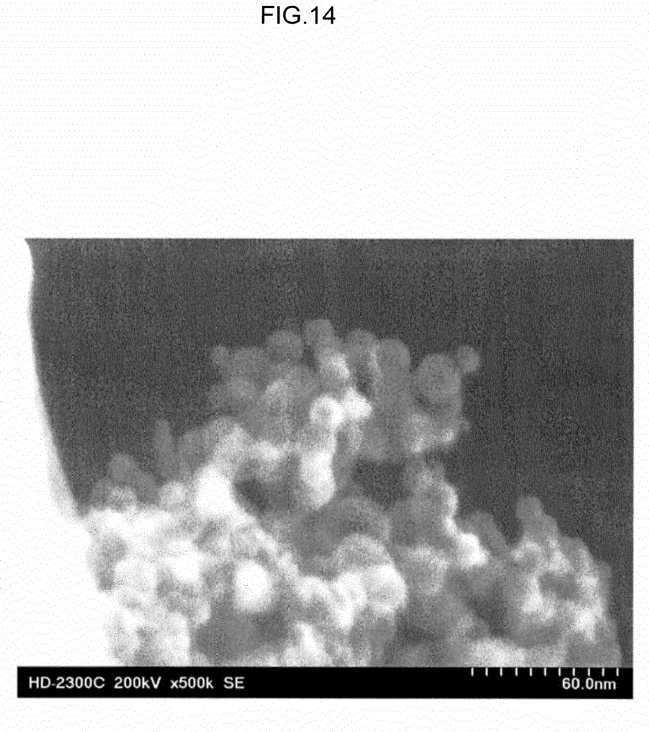

The powder formed is collected by the collecting filter 27 (Fig. 2), and a collected amount of the powder was 7.5 g in a 20-minute operation. The Ti_{0.95}Nb_{0.05}O_{2-δ} powder was evaluated by XRD (refer to Fig. 13), and the form was observed by a scanning transmission electron microscope (STEM) (refer to Fig. 14). A green compact of the Ti_{0.95}Nb_{0.05}O_{2-δ} powder was produced, then the porosity was calculated to be 40% and the electric conductivity was 0.2 (S/cm).

A specific surface area of the powder was a BET value of 78.0 m²/g. A distance between centers of the primary particles which join each other (r_{c}) was smaller than the sum of the radii of the corresponding primary particles (r₁, r₂), that is, 50 nm or less. Furthermore, 0.5g of the powder was filled in a steel container having a rectangular hole of 5.0 mm in width, 25 mm in length, and 20 mm in depth, and then pressure of 50 kgf/m² was applied for 1 minute with a uniaxial pressure device to make a green compact.

The bulk specific gravity was 0.85 with respect to a theoretical bulk specific gravity calculated in a closest packed state of the particles having an average particle diameter. The green compact was produced, then the porosity was calculated to be 40% and the electric conductivity was less than 0.1 S/cm. A specific surface area of the powder was a BET value of 72.3 m²/g. A distance between centers of the primary particles which join each other (r_{c}) was smaller than the sum of the radii of the corresponding primary particles (r₁, r₂), that is, 50 nm or less.

### < Reference Example 4>

### (Sr(Ti_{0.9}Nb_{0.1})O_{3-δ} support)

Also in the present Reference Example, the synthesizing apparatus for a flame process shown in Fig. 2 was used. A flow rate of oxygen, air, and propane at the time of synthesizing and formation of a chemical flame is the same as in Reference Example 1. A solution which is obtained by dissolving strontium octylate, titanium octylate, and niobium octylate in mineral turpentine is made into mist by the same method as in Reference Example 1 and introduced into a chemical flame. The temperature of the chemical flame is raised to
approximately 1600 degrees C by the heat of combustion of propane and mineral turpentine, and a Sr(Ti_{0.9}Nb_{0.1})O_{3-δ} powder is formed in the chemical flame.

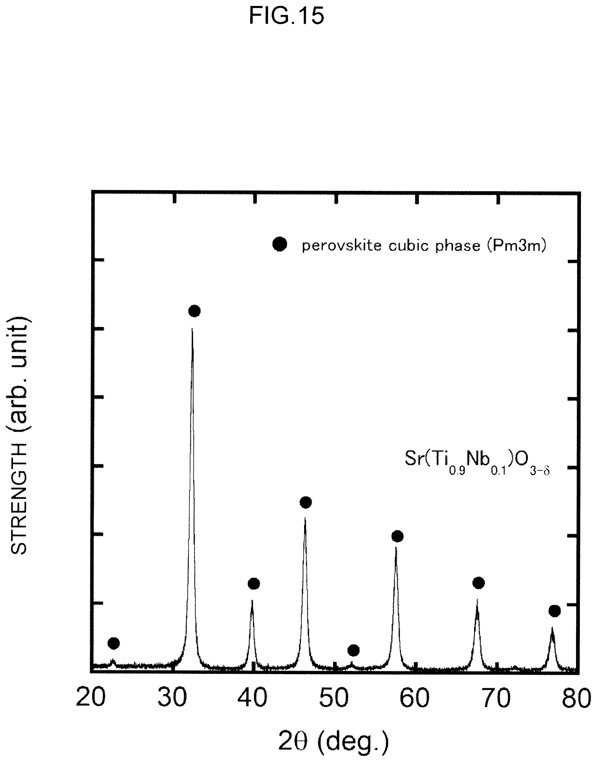

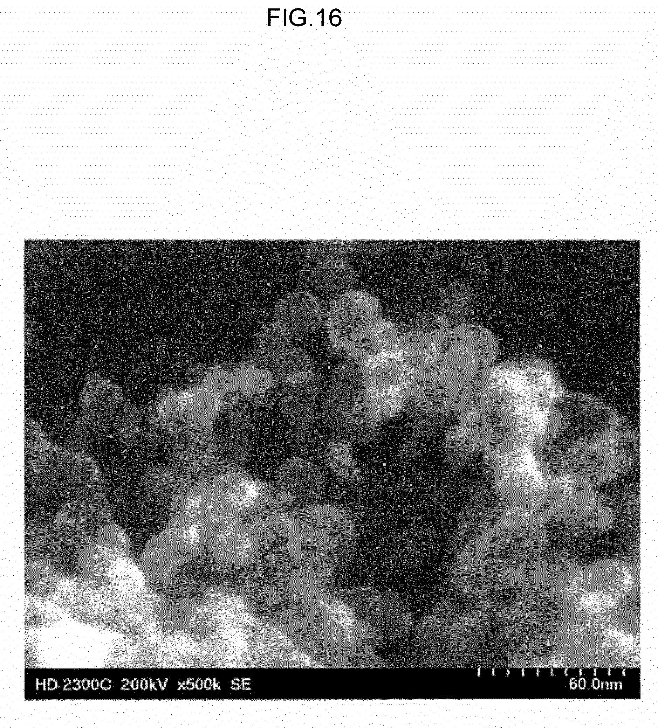

The powder formed is collected by the collecting filter 27 (Fig. 2), and a collected amount of the powder was 8.5 g in a 20-minute operation. The Sr(Ti_{0.9}Nb_{0.1})O_{3-δ} powder was evaluated by XRD (refer to Fig. 15), and the form was observed by a scanning transmission electron microscope (STEM) (refer to Fig. 16). 0.5g of the Sr(Ti_{0.9}Nb_{0.1})O_{3-δ} powder was filled in a steel container having a rectangular hole of 5.0 mm in width, 25 mm in length, and 20 mm in depth, and then pressure of 50 kgf/m² was applied for 1 minute with a uniaxial pressure device to make a green compact.

The bulk specific gravity with respect to a theoretical bulk specific gravity calculated in a closest packed state of the particles with an average particle diameter was 0.9. The electric conductivity was 0.2 S/cm. A specific surface area of the powder was a BET value of 67.8 m²/g. A distance between centers of the primary particles which join together (r_{c}) was smaller than the sum of the radii of the corresponding primary particles (r₁, r₂), that is, 50 nm or less.

### < Reference Example 5>

### ((La_{0.6}Sr_{0.4})TiO_{3-δ} support)

Also in the present Reference Example, the synthesizing apparatus for a flame method shown in Fig. 2 was used. A flow rate of oxygen, air, and propane at the time of synthesizing and formation of a chemical flame is the same as in Reference Example 1. A solution which is obtained by dissolving lanthanum octylate, strontium octylate, and titanium octylate in mineral turpentine is made into mist by the same method as in Reference Example 1 and introduced into a chemical flame. The temperature of the chemical flame is raised to approximately 1600 degrees C by the heat of combustion of propane and mineral turpentine, and a (La_{0.6}Sr_{0.4})TiO_{3-δ} powder is formed in the chemical flame.

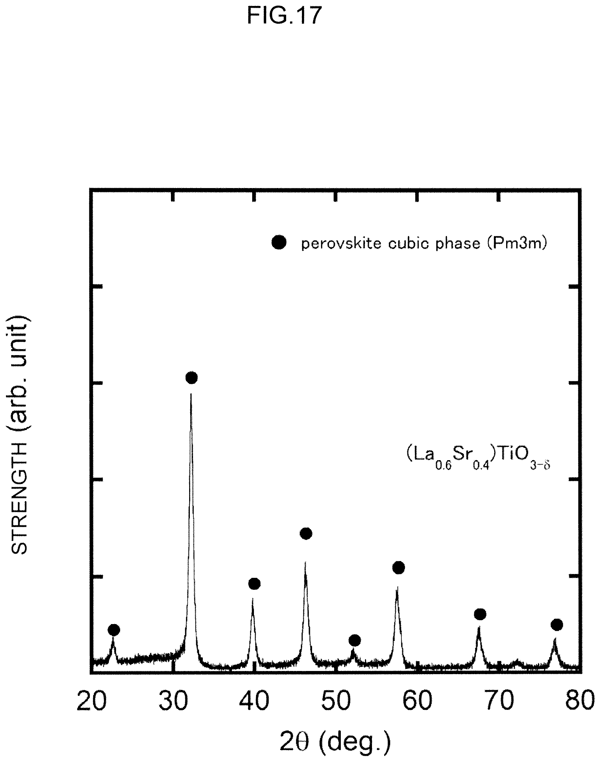

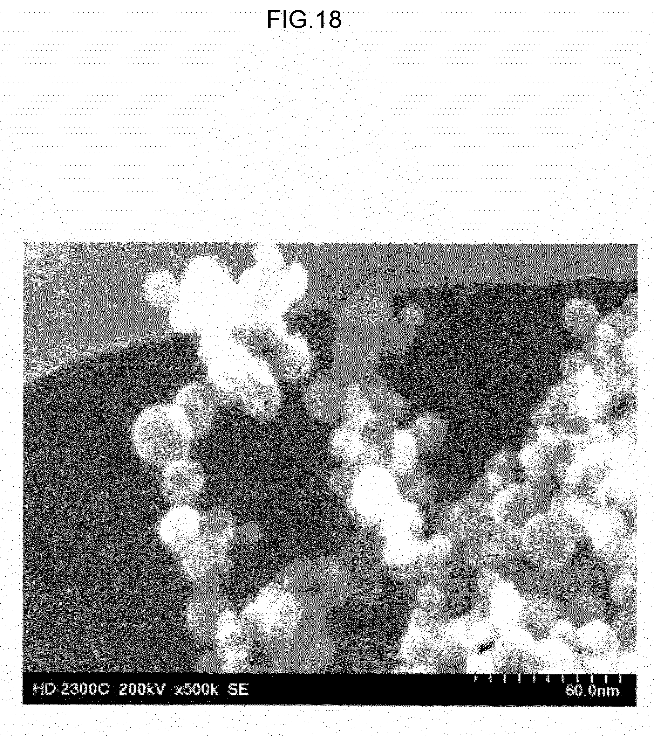

The powder formed is collected by the collecting filter 27 (Fig. 2), and a collected amount of the powder was 10 g in a 20-minute operation. The (La₀.₆Sr_{0.4})TiO_{3-δ} powder was evaluated by XRD (refer to Fig. 17), and the form was observed by a scanning transmission electron microscope (STEM) (refer to Fig. 18). 0.5g of the (La_{0.6}Sr_{0.4})TiO_{3-δ} powder was filled in a steel container having a rectangular hole of 5.0 mm in width, 25 mm in length, and 20 mm in depth, and then pressure of 50 kgf/m² was applied for 1 minute with a uniaxial pressure device to make a green compact.

The bulk specific gravity was 0.9 with respect to a theoretical bulk specific gravity calculated in a closest packed state of the particles with an average particle diameter. The electric conductivity was 0.7 S/cm. A specific surface area of the powder was a BET value of 70.7 m²/g. A distance between centers of the primary particles which join each other (r_{c}) was smaller than the sum of the radii of the corresponding primary particles (r₁, r₂), that is, 50 nm or less.

### < Reference Example 6>

### (20 wt%-platinum catalyst supported on Sn_{0.96}Sb_{0.04}O_{2-δ} catalyst prepared by colloidal method)

As in the above-mentioned Reference Examples, a Sn_{0.96}Sb_{0.04}O_{2-δ} powder was synthesized by the synthesis apparatus for a flame process, then a crystal phase was evaluated by XRD and the form was observed by a transmission electron microscope (TEM) (refer to Fig. 4).

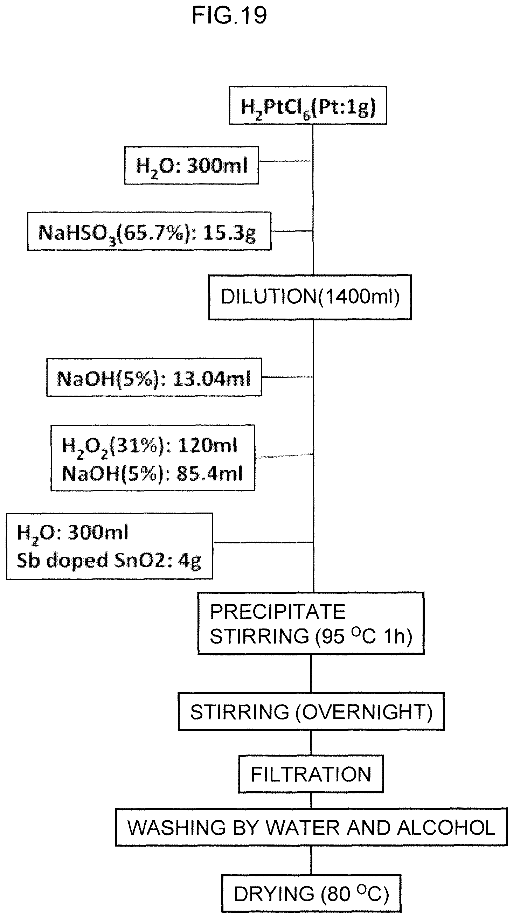

Next, in accordance with a production procedure in Fig. 19, 2.7 g of chloroplatinic acid hexahydrate was dissolved in 300 ml of ultrapure water, and furthermore, 15.3 g of sodium sulfite was added and stirred. The solution is diluted with 1400 ml of water, and the pH of the solution was adjusted to 5 by using NaOH. Then, 120 ml of hydrogen peroxide was added and the pH was readjusted to 5 by NaOH.

The obtained solution was mixed with 300 ml of ultrapure water in which 4 g of the Sn_{0.96}Sb_{0.04}O_{2-δ} powder was dispersed, and stirred at 95 degrees C for 1 hour. After cooling to room temperature, filtration and washing by ultrapure water and alcohol were performed, and drying was carried out at 80 degrees C, whereby a platinum catalyst supported on Sn_{0.96}Sb_{0.04}O_{2-δ} catalyst powder was obtained. The supported amount of Pt was confirmed to be 16 wt% by using inductively coupled plasma emission spectrometry (ICP).

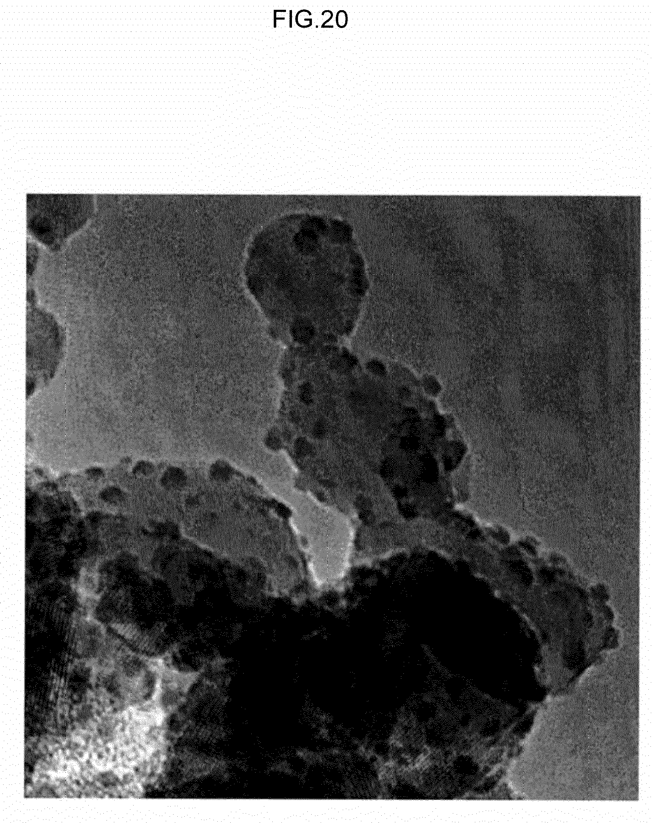

Furthermore, a form of the obtained powder was observed by TEM (refer to Fig. 20). Each particle of the Sn_{0.96}Sb_{0.04}O_{2-δ} powder was bound each other and three-dimensionally linked together in a chain form. Moreover, Pt had a globular shape and was uniformly dispersed and supported on the surface of the Sn_{0.96}Sb_{0.04}O_{2-δ}, and the average particle diameter was 1.5 nm (calculated by averaging the particle diameters of 500 particles).

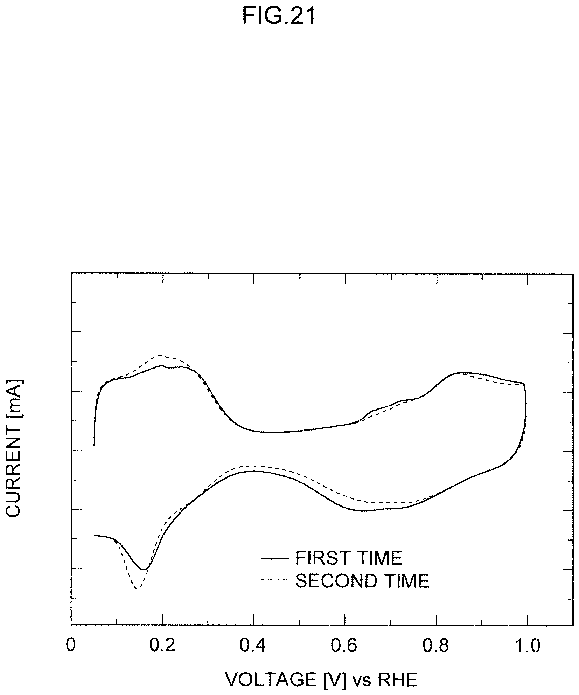

For each electrode powder obtained by the above methods, a CV measurement was performed using a rotating ring disk electrode. As an electrolyte, 0.1 mol/l of a perchloric acid solution, and as a reference pole, a reversible hydrogen electrode (RHE) were used. A scattering rate of an electric potential was set to 0.1 V/sec. Fig. 21 shows a result of the CV measurement after a sweep was performed 100 times in an electric potential range of 0.05 V to 1.3 V. In the platinum catalyst supported on Sn_{0.96}Sb_{0.04}O_{2-δ} electrode, a current value around 0.2 V to 0.6 V was constant in each measurement, and a platinum effective reaction area (ECA) which was calculated from a peak area attributable to an oxygen adsorption wave around 0.05 V to 0.4 V was 57 m²/g_{(Pt)}, while, in another platinum catalyst supported on Sn_{0.96}Sb_{0.04}O_{2-δ} catalyst which was produced under the same condition in order to confirm reproducibility, the ECA was measured to be 60m²/g_{(Pt)}.

Thus, it was found that, even in a high-potential of 0.9 V or more, the platinum catalyst supported on Sn_{0.96}Sb_{0.04}O_{2-δ} electrode had no deterioration and showed stable performance. Moreover, as shown in Table 1, an activity control current density of the platinum catalyst supported on Sn_{0.96}Sb_{0.04}O_{2-δ} catalyst which was measured by hydrodynamic voltammetry was 6.78 mA/cm² (0.70 V), and the activity was confirmed to be more improved than in a commercial Pt/C catalyst. Here, Table 1 shows the activity control current density of the platinum catalyst supported on Sn_{0.96}Sb_{0.04}O_{2-δ} catalyst.

**[Table 1]**

| Electric potential (V vs. RHE) | Activity control current density (mA/cm²) |
|---|---|
| 0.7 | 6.78 |
| 0.76 | 3.04 |
| 0.8 | 1.53 |

### < Reference Example 7>

### (10 wt%-platinum catalyst supported on TiN catalyst prepared by colloidal method)

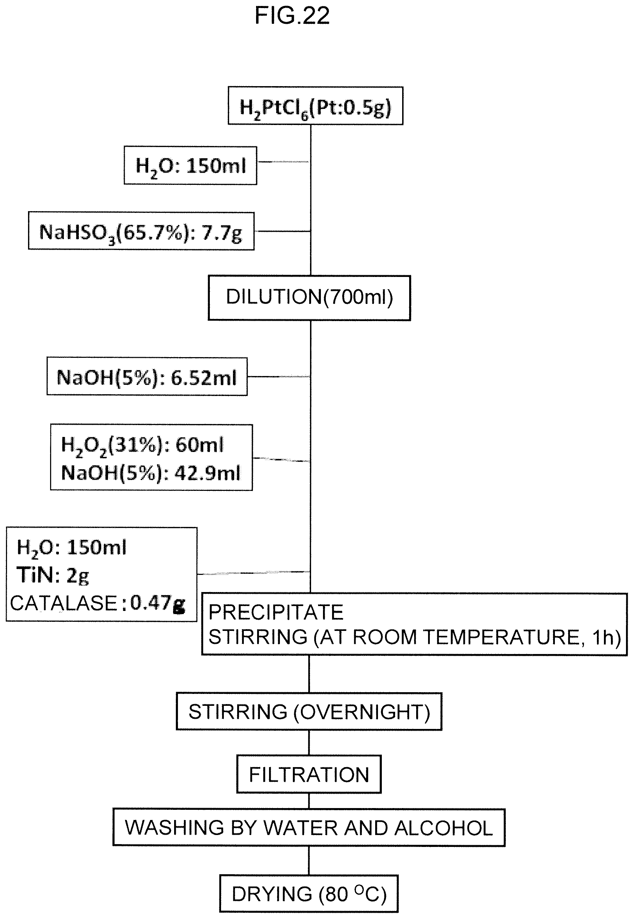

In accordance with a production procedure in Fig. 22, 1.35 g of chloroplatinic acid hexahydrate was dissolved in 150 ml of ultrapure water, and furthermore, 7.7 g of sodium sulfite was added and stirred. The solution is diluted with 700 ml of water, and the pH of the solution was adjusted to 5 by using NaOH.

Then, 60 ml of hydrogen peroxide was added and the pH was readjusted to 5 by NaOH. The obtained solution was mixed with 150 ml of ultrapure water in which 2 g of the TiN powder and 0.47 g of catalase were dispersed, and stirred at room temperature for 1 hour. Filtration and washing by ultrapure water and alcohol were performed, and drying was carried out at 80 degrees C, whereby a platinum catalyst supported on TiN catalyst powder was obtained. The supported amount of Pt was confirmed to be 10 wt% by using inductively coupled plasma emission spectrometry (ICP).

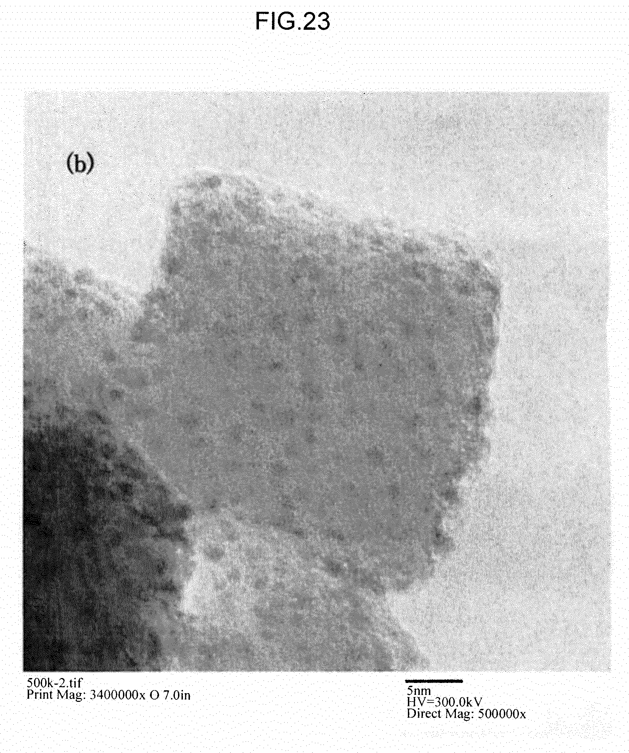

Furthermore, a form of the obtained powder was observed by TEM (refer to Fig. 23). Each particle of the TiN was a cube or a rectangular parallelepiped, and Pt had a globular shape and the average particle diameter was approximately 1 nm.

### Industrial availability

PEFC has been applied to fuel cell powered vehicles, which have attracted attention in recent years. As an electrode material used for PEFC, there has been used a material in which noble-metal particles having a particle diameter of 1 nm to 20 nm are supported on a support of carbon. However, in an electrode for vehicles, frequent load change and start-stop corresponding to acceleration and deceleration during driving arise, and electric potential of a cathode at that time reaches 0.9 V or more. In the high potential of 0.9 V or more, carbon considerably degrades by an oxidation reaction.

The electrode support of the present invention uses no carbon, thereby is stable even in the high-potential of 0.9 V or more and has high conductivity, and in addition, has a high specific surface area, whereby noble-metals particles having a particle diameter of 1 nm to 20 nm can be supported, and durability and high catalytic activity can be achieved. Therefore, the application to electric vehicles etc. equipped with PEFC is expected.

### Reference Signs List

- 1: Nitride support,
- 2: Platinum nano particles,
- 21: Air,
- 22: Fuel gas (propane) · oxygen,
- 23: Raw material solution,
- 24: Spray nozzle,
- 25: Chemical flame,
- 26: Aggregation body of primary particles,
- 27: Collecting filter for aggregation body of primary particles,
- 28: Collecting apparatus,
- 31: Gas introducing portion,
- 32: Gas introducing portion,
- 33: Gas mixer,
- 34: Stainless pipe,
- 35: Solution introducing portion,
- 36: Support gas introducing portion,
- 37: Mixer,
- 38: Stainless Pipe,
- 39: Retainer cap,
- 40: Burner.

## Claims

1. A carrier (1) for electrode catalysts, wherein
an aggregation body (26) which is formed by aggregating primary particles of oxide of at least one kind of metal selected from transition metals, tin, antimony, zirconium, molybdenum, indium, tantalum, and tungsten reduced in nitrogen gas or an ammonia atmosphere at a high temperature place of 500 degrees C or more to be at least partially metal nitride,
the aggregation body (26) is configured such that at least 80% of crystallites at least a part of which is metal nitride and which have a size of 5 nm to 100 nm aggregate and bind each other to form chain or dendritic structures each of which is made of 5 or more crystallites and
the aggregation body (26) is obtained by preparing a mineral turpentine solution containing the ions of said metals, making the solution into a mist by using an atomizer using oxygen, and introducing the solution into a high-temperature chemical flame or plasma.

2. An electrode catalyst comprising a carrier (1) for electrode catalysts according to claim 1, wherein the carrier (1) supports 1 to 50 wt% of a noble metal (2) and/or an alloy containing a noble metal, each having an average particle diameter of 1 to 20 nm.

3. An electrode catalyst comprising a carrier (1) covering material which covers a part of a surface of the electrode catalyst according to claim 2, wherein the carrier (1) covering material is removed by acid treatment.

4. A fuel cell, using the electrode catalyst according to claim 3.

## Patentansprüche

1. Träger (1) für Elektrodenkatalysatoren, wobei
ein Aggregationskörper (26) vorliegt, welcher gebildet wird durch Aggregieren von Primärteilchen von Oxid von wenigstens einer Art von Metall, ausgewählt aus Übergangsmetallen, Zinn, Antimon, Zirconium, Molybdän, Indium, Tantal und Wolfram, reduziert in Stickstoffgas oder einer Ammoniakatmosphäre an einem Ort mit hoher Temperatur von 500 °C oder mehr, so dass er wenigstens teilweise Metallnitrid ist,
der Aggregationskörper (26) so konfiguriert ist, dass wenigstens 80 % Kristallite, von denen wenigstens ein Teil Metallnitrid ist und welche eine Größe von 5 nm bis 100 nm aufweisen, aggregieren und einander binden, um Kettenstrukturen oder dendritische Strukturen zu bilden, von denen jede aus 5 oder mehr Kristalliten besteht, und
der Aggregationskörper (26) erhalten wird durch Herstellen einer mineralischen Terpentinlösung, welche die Ionen der Metalle enthält, Bilden eines Nebels aus der Lösung unter Verwendung eines Zerstäubers unter Verwendung von Sauerstoff, und Einführen der Lösung in eine chemische Hochtemperaturflamme oder Plasma.

2. Elektrodenkatalysator umfassend einen Träger (1) für Elektrodenkatalysatoren gemäß Anspruch 1, wobei der Träger (1) 1 bis 50 Gew.-% eines Edelmetalls (2) und/oder einer Legierung, die ein Edelmetall enthält, trägt, die jeweils einen mittleren Teilchendurchmesser von 1 bis 20 nm aufweisen.

3. Elektrodenkatalysator umfassend ein Träger (1) bedeckendes Material, welches einen Teil einer Oberfläche des Elektrodenkatalysators gemäß Anspruch 2 bedeckt, wobei das Träger (1) bedeckende Material durch Säurebehandlung entfernt wird.

4. Brennstoffzelle, die den Elektrodenkatalysator gemäß Anspruch 3 verwendet.

## Revendications

1. Porteur (1) pour catalyseurs d'électrode, dans lequel
un élément d'agrégation (26), est formé en regroupant des particule primaires d'oxyde d'au moins un type de métal à partir des métaux de transition : l'étain, l'antimoine, le zirconium, le molybdène, l'indium, le tantale et le tungstène, réduit dans un gaz d'azote ou dans une atmosphère d'ammoniac dans un emplacement sous haute température de 500 °C ou plus pour devenir au moins partiellement un nitrure de métal,
l'élément d'agrégation (26) est configuré de sorte qu'au moins 80 % de cristallites, dont au moins une partie représente du nitrure de métal, et qui présentent une taille allant de 5 nm à 100 nm s'agrègent et se lient les uns aux autres pour former une chaîne ou des structures dendritiques dont chacune est constituée de 5 cristallites ou plus, et
l'élément d'agrégation (26) est obtenu en préparant une solution de térébenthine minérale contenant les ions desdits métaux, en transformant la solution en une brume en utilisant un atomiseur utilisant de l'oxygène, et en introduisant la solution dans une flamme chimique à haute température ou dans un plasma.

2. Catalyseur d'électrode comprenant un porteur (1) pour catalyseurs d'électrode selon la revendication 1, dans lequel le porteur (1) supporte de 1 à 50 % en poids d'un métal noble (2) et/ou un alliage contenant un métal noble, chacun présentant un diamètre moyen de particules allant de 1 à 20 nm.

3. Catalyseur d'électrode comprenant un matériau recouvrant un porteur (1), lequel recouvre une partie de la surface du catalyseur d'électrode conforme à la revendication 2, le matériau recouvrant le porteur (1) étant éliminé par un traitement acide.

4. Pile à combustible utilisant le catalyseur d'électrode conforme à la revendication 3.
